# EUROPEAN PATENT APPLICATION

(11) **EP 4 733 920 A1**
(43) Date of publication of application: **29.04.2026**
(21) Application number: 24825549.9
(22) Date of filing: 08.04.2024
(51) Int. Cl.: G06F 3/06, G06F 3/08, G06F 13/12, H04N 5/76

(54) **VIDEO RECORDING SYSTEM, INFORMATION PROCESSING DEVICE, AND RECORDING METHOD**

(30) Priority: 20.06.2023 JP 2023100947
(71) Applicant: Panasonic Intellectual Property Management Co., Ltd., Kadoma-shi, Osaka 571-0057 (JP)
(72) Inventor: YAMASHITA, Hideaki, Kadoma-shi, Osaka 571-0057 (JP)
(74) Representative: Novagraaf International SA
(86) International application number: PCT/JP2024/014230
(87) International publication number: WO 2024/262139

(57) **Abstract**

A video recording system includes an information processing device that performs processing related to video data, and a first storage including a semiconductor memory capable of recording the video data. The first storage includes multiple pages and multiple erasure blocks. Each of the multiple pages is a unit of writing. Each of the multiple erasure blocks is a unit of erasure of data, and includes consecutive pages among the multiple pages. The information processing device generates unit data with a size equivalent to one or more erasure blocks from the video data based on analysis of the video data, and records the unit data in the first storage.

## Description

### TECHNICAL FIELD

The present disclosure relates to a video recording system that records video data in a storage including a semiconductor memory, an information processing device, and a recording method for recording video data in the storage.

### BACKGROUND ART

There is known a system that inputs video data output from a video output device such as a camera and records the video data in a storage (for example, a solid state drive (SSD)) including a semiconductor memory (see PTL 1, for example). The video data recorded in the storage is used for future reproduction or video editing, for example.

### Citation List

### Patent Literature

PTL 1: International Publication No. 2019/112710

### SUMMARY OF THE INVENTION

Data recorded in a storage including a semiconductor memory is erased in units of a block called an "erasure block" or the like. A block being a unit of erasure includes multiple units of writing data (referred to as "pages" or the like).

When data recorded halfway through an erasure block is erased in a configuration in which multiple pages are included in the erasure block as described above, processing is required to erase not only the data recorded halfway through the erasure block but also other data recorded in the erasure block, and to move the erased other data to another erasure block. This processing is called "garbage collection".

The garbage collection described above reduces operation speed (writing speed, reading speed) of the storage. Thus, the garbage collection performed as little as possible is preferable.

The present disclosure suppresses occurrence of the garbage collection in a storage including a semiconductor memory.

A video recording system according to an aspect of the present disclosure includes an information processing device and a first storage. The information processing device performs processing related to video data. The first storage includes a semiconductor memory capable of recording the video data. The first storage in the video recording system includes multiple pages and multiple erasure blocks. Each of the multiple pages is a unit of writing. Each of the multiple erasure blocks is a unit of erasure of data, and includes consecutive pages among the multiple pages. The information processing device generates unit data with a size equivalent to one or more erasure blocks from the video data, based on analysis of the video data, and records the unit data in the first storage.

The first storage including the semiconductor memory in the video recording system of the present disclosure includes multiple pages that are each a unit of writing data, and multiple erasure blocks that are each a unit of erasure of data, the erasure blocks each including multiple consecutive pages. The information processing device generates unit data with a size equivalent to one or more erasure blocks from the video data, and records the unit data in the first storage. The unit data has the size equivalent to the one or more erasure blocks, so that other data is not recorded in the erasure block in which certain unit data is recorded. Thus, when the certain unit data is erased, only the unit data needs to be erased in units of an erasure block. Then, other data recorded in another erasure block does not need to be erased and moved to yet another erasure block. To erase data in a specific erasure block, other data recorded in the specific erasure block and not to be erased does not need to be erased and moved to another erasure block as described above. Thus, an occurrence of the garbage collection can be suppressed.

### BRIEF DESCRIPTION OF THE DRAWINGS

Fig. 1 is a diagram illustrating a configuration of a video recording system.
Fig. 2 is a diagram illustrating a configuration of an information processing device.
Fig. 3 is a flowchart illustrating operation example 1 of recording video data.
Fig. 4 is a diagram illustrating an example of a method of determining a size of a unit file in a case where there are multiple types of first storages having different erasure block sizes.
Fig. 5 is a flowchart illustrating operation example 2 of recording video data.
Fig. 6 is a flowchart illustrating recording operation of video data in operation example 2.
Fig. 7 is a diagram illustrating a configuration of a video recording system according to modification 2.
Fig. 8 is a diagram illustrating a configuration of an information processing device according to modification 2.
Fig. 9 is a diagram illustrating a configuration of a video file in operation example 3.
Fig. 10 is a diagram illustrating an example of a method for managing a video file using a logical address.
Fig. 11 is a diagram illustrating another example of the video recording system.

### DESCRIPTION OF EMBODIMENT

Exemplary embodiments will be described in detail below with reference to the drawings as appropriate. However, unnecessarily detailed description may not be described. For example, a detailed description of an already well-known matter and a duplicated description of substantially the same configuration may not be described. This is to avoid unnecessary redundancy of the following description and to facilitate understanding of those skilled in the art. The inventors provide the accompanying drawings and the following description for those skilled in the art to fully understand the present disclosure, thus not intending to limit the subject matter described in the scope of claims by them.

In the present disclosure, "video data" means data including moving video data and sound data, data including only moving video data, and data including still image data. Division of data means that the data is divided as necessary, and divided data has a size equivalent to a size of a predetermined division unit.

### [1. Video recording system]

Hereinafter, video recording system 100 of the present disclosure will be described with reference to the drawings. Video recording system 100 is configured to record video data acquired by video output device 2 to be described later in a storage. The video data recorded in the storage is used for future reproduction or editing, for example. The editing of the video data includes generating new video data by inserting a specific part of other video data into the video data, for example.

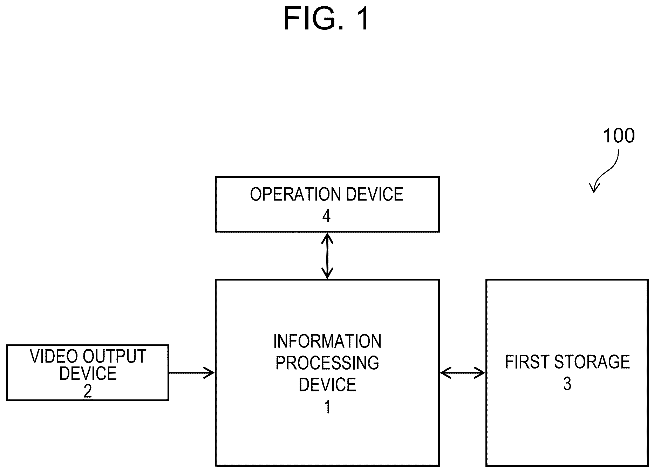

A configuration of video recording system 100 will be described below with reference to Fig. 1. Fig. 1 is a diagram illustrating the configuration of video recording system 100. Video recording system 100 includes information processing device 1 and first storage 3.

Information processing device 1 is connected to video output device 2. Video output device 2 is configured to acquire the video data and output the video data to the outside. Video output device 2 is a video imaging device including a camera that shoots a predetermined video, and a microphone that acquires a sound of the predetermined video, for example. Besides this, video output device 2 may be a media server in which a large number of videos are recorded. The video output from video output device 2 is a high quality video such as a 4K video in an uncompressed format, for example. Although Fig. 1 illustrates an example in which only one video output device 2 is provided, the present invention is not limited thereto. Video recording system 100 may include multiple video output devices 2.

Information processing device 1 performs various types of information processing related to the video data received from video output device 2. Information processing device 1 is also connected to operation device 4. Operation device 4 is configured to perform an operation for editing the video data. Operation device 4 includes an input device (e.g., a keyboard, a mouse, an operation panel, or the like) that performs an operation related to the editing of the video data, and a display device (e.g., a display) that displays the video data, for example.

Information processing device 1 is connected to first storage 3. Information processing device 1 records the video data received from video output device 2, the video data converted into the compressed format, the edited video data, and the like in first storage 3. Information processing device 1 also reads specific video data from first storage 3.

First storage 3 reads designated video data according to an instruction from information processing device 1. First storage 3 also records the video data received from information processing device 1 according to the instruction from information processing device 1. Examples of first storage 3 include an enterprise solid state drive (SSD) such as an SSD of a triple level cell (TLC) type including a semiconductor memory (e.g., flash memory) capable of recording video data.

The semiconductor memory of first storage 3 includes multiple pages that are each an unit of data writing. The semiconductor memory of first storage 3 also includes multiple erasure blocks that are each a unit of erasure of data. Each erasure block includes multiple pages. That is, first storage 3 performs writing of data in units of a page, and erasure of data in units of an erasure block.

### [2. Information processing device]

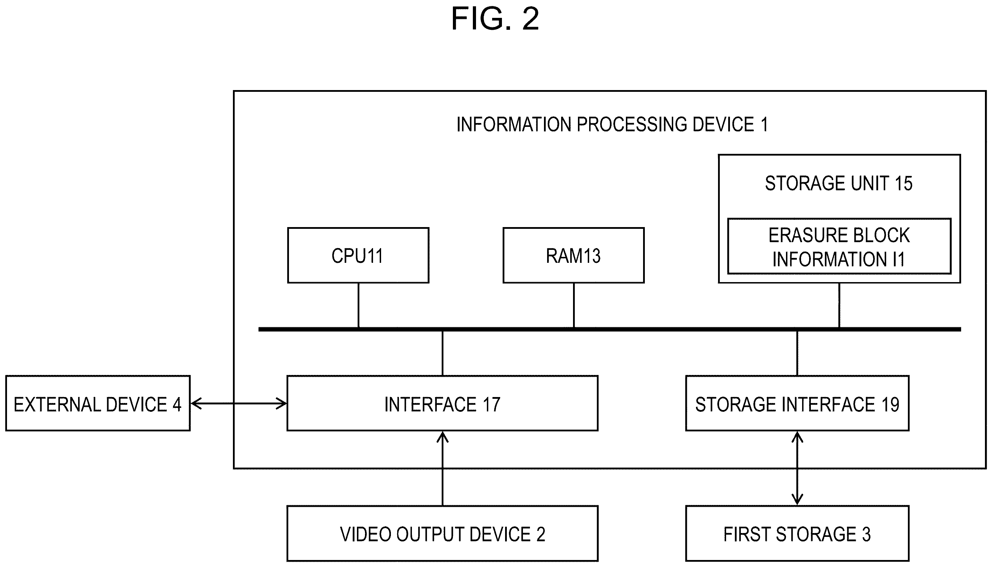

A configuration of the information processing device 1 will be described with reference to Fig. 2. Fig. 2 is a diagram illustrating the configuration of information processing device 1. Information processing device 1 includes CPU 11, RAM 13, storage unit 15, interface 17, and storage interface 19.

CPU 11 performs various processing in information processing device 1. Specifically, CPU 11 performs information processing such as compression processing, information processing related to editing, and analysis processing of video data acquired from video output device 2.

CPU 11 performs compression processing with inter-frame prediction as the compression processing of the video data, for example. Specifically, CPU 11 converts the video data acquired from video output device 2 into an I frame, a P frame, and a B frame, and generates compressed video data using these frames. The I frame is configured to hold every information for displaying a video of the frame. That is, the video can be displayed only with the I frame. The P frame is configured to hold information on a difference from the previous I frame, and the video cannot be displayed only with this frame. The B frame is configured to hold information on differences from the I frame, the P frame, and a B frame before and after the B frame, and the video cannot be displayed only with this frame.

CPU 11 compresses the video data by setting an initial frame of the video data as the I frame and setting remaining frames as the P frame or the B frame. Consequently, a size of the video data recorded in first storage 3 can be reduced.

CPU 11 outputs the video data to operation device 4 to display the video data, and receives operation of operation device 4 to edit the video data as information processing related to editing of the video data.

RAM 13 is a storage region for temporarily storing an instruction, video data, and the like generated by CPU 11. Storage unit 15 includes a ROM, a hard disk (HDD), or a solid state drive (SSD), for example. Storage unit 15 stores settings related to information processing performed by information processing device 1, parameters used for the information processing, and the like.

Storage unit 15 stores erasure block information I1. Erasure block information I1 stores sizes of erasure blocks included in first storage 3. The erasure blocks are each a unit of erasure of data in first storage 3.

Interface 17 connects information processing device 1 and another device. As illustrated in Fig. 2, video output device 2 and operation device 4 are connected to interface 17. Examples of interface 17 include an interface for connecting video-related devices, such as an interface conforming to a serial digital interface (SDI) standard.

Interface 17 may include a network interface such as a Gigabit Ethernet (registered trademark) interface, for example. Video output device 2, operation device 4, and/or another device may be connected to the network interface. This configuration enables transmission conforming to the ST2110 standard of the SMPTE standardization organization to be used for communication between information processing device 1 and another device, for example. The network interface may be capable of directly transmitting and receiving data and the like between RAM 13 of information processing device 1 and a RAM of another device by remote direct memory access (RDMA). Consequently, data can be transmitted and received at high speed between information processing device 1 and another device.

Storage interface 19 connects first storage 3. Storage interface 19 is a PCIe interface conforming to the PCI express standard of the PCI-SIG standard, for example. Consequently, information processing device 1 and first storage 3 can transmit and receive data and the like at high speed by a protocol (non-volatile memory express (NVMe)) dedicated to a nonvolatile memory using a PCI-Express bus. The NVMe allows a controller to acquire data in a NAND memory using a NAND protocol, and replace the data with a PCIe protocol to transfer the data toward a host. In this regard, a conventional Serial-ATA (SATA) allows a DMA controller, which directly transfers data toward a host, to acquire data from the NAND memory by converting the data to an SATA protocol, and further replace the data with the PCIe protocol to transfer the data to the host. That is, processing of the NVMe directly converts the NAND protocol into the PCIe protocol, so that data transfer processing speed is high.

Information processing device 1 includes CPU 11, RAM 13, interface 17, and storage interface 19, which constitute a controller of information processing device 1. Then, storage unit 15 constitutes a storage unit of information processing device 1.

### [3. Operation of video recording system]

### [3-1. Operation example 1]

An operation of recording video data in video recording system 100 will be described below. First, operation example 1 of recording video data will be described. Operation example 1 is performed to generate unit data with a size equivalent to one or more erasure blocks from video data being stream data as one file (referred to as a unit file), and to record the unit file in the semiconductor memory of first storage 3.

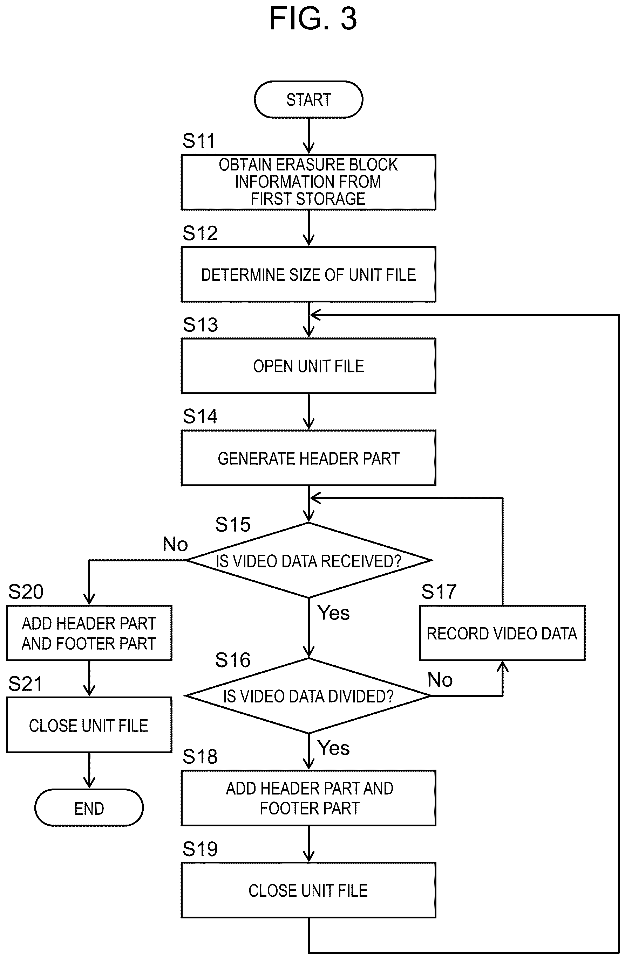

Hereinafter, a specific operation in operation example 1 of recording video data will be described with reference to Fig. 3. Fig. 3 is a flowchart illustrating operation example 1 of recording video data. When video recording system 100 is activated, information processing device 1 acquires erasure block information I1 in first storage 3 (step S11). Specifically, CPU 11 requests first storage 3 to transmit erasure block information I1. First storage 3 having received this request transmits erasure block information I1 to information processing device 1. When information processing device 1 receives erasure block information I1, CPU 11 stores received erasure block information I1 in storage unit 15.

After erasure block information I1 is acquired, recording of video data is started. Specifically, the video data is recorded as follows.

First, CPU 11 of information processing device 1 determines a size of the unit file (unit data) in which the video data is recorded (step S12). CPU 11 sets the size of the unit file to a size equivalent to one or more erasure blocks. Specifically, CPU 11 sets the size of the unit file to one or more times the size of the erasure block (referred to as an erasure block size) indicated by erasure block information I1.

When multiple types of erasure block sizes are considered in video recording system 100, such as when multiple first storages 3 having different erasure block sizes exist, the size of the unit file can be set to a least common multiple of the multiple erasure block sizes.

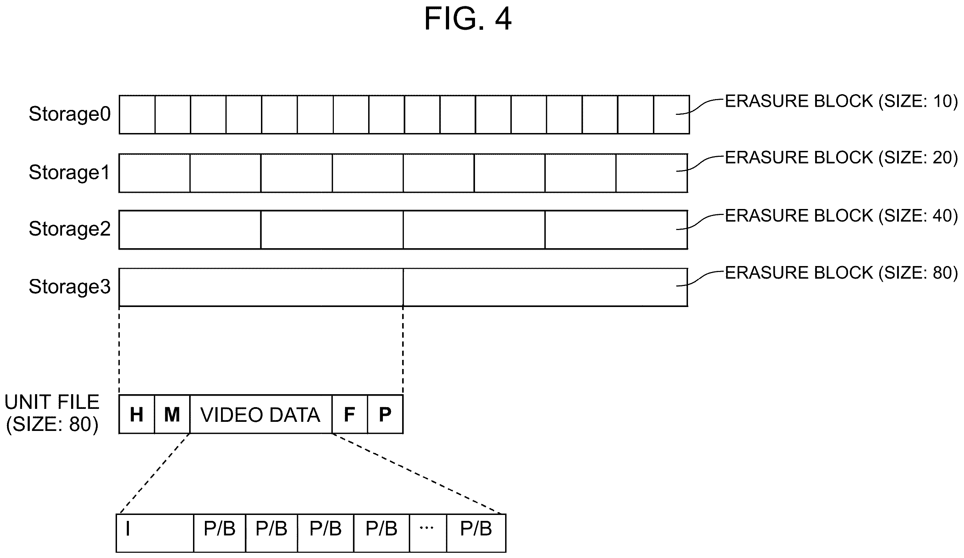

For example, when a storage (Storage 0) having an erasure block size of "10", a storage (Storage 1) having an erasure block size of "20", a storage (Storage 2) having an erasure block size of "40", and a storage (Storage 3) having an erasure block size of "80" exist as first storages 3 as illustrated in Fig. 4, "80", which is the least common multiple of the erasure block sizes of these storages, is set as the unit file size. Fig. 4 is a diagram illustrating an example of a method of determining a size of a unit file in a case where there are multiple types of first storages 3 having different erasure block sizes.

As will be described later, the unit file is generated by adding a header part and a footer part to video data. Thus, a size of the video data that can be recorded in the unit file is set to a size obtained by subtracting sizes of the header part and the footer part from one or more times the erasure block size.

After the size of the unit file is determined, CPU 11 generates and opens a unit file for recording video data (step S13). Here, opening the unit file means that the unit file is allowed to record data. CPU 11 records unit data in first storage 3 by aligning the unit data with a boundary of the erasure block, based on erasure block information I1. Specifically, a start address of the unit file is set as a start address of an empty erasure block in which other data is not recorded and data can be recorded among multiple erasure blocks included in first storage 3. Consequently, the unit data can be reliably prevented from being recorded in the middle of an erasure block or from being ended in the middle of the erasure block. As a result, the garbage collection can be more reliably suppressed.

Next, CPU 11 generates a header part to be included in the unit file (step S14). As illustrated in Fig. 4, the header part includes information (H) related to the unit file and/or video data recorded in the unit file, metadata (M), and the like. The metadata records an access frequency to the video data, a degree of importance of the video data, and use process information on the video data, for example. The use process information is related to recording, editing, sending, and/or reuse of the video data, for example.

After that, CPU 11 determines whether the video data is received from video output device 2 (step S15). When the video data is received ("Yes" in step S15), CPU 11 determines not only whether the video data having the size determined in step S12 is written in the unit file currently in an open state, but also whether the video data needs to be divided (step S16). That is, it is determined whether the video data needs to be recorded in another unit file.

When the video data does not need to be recorded in another unit file ("No" in step S16), that is, when the video data recorded in the current unit file has a size smaller than the size determined in step S12, CPU 11 records the video data received from video output device 2 in the current unit file (step S17).

When the video data is recorded, CPU 11 compresses the video data and records the compressed video data in the unit file. Specifically, when the received video data is data in an initial frame to be recorded in the unit file, CPU 11 records the video data directly in the unit file as the I frame as illustrated in Fig. 4. In contrast, when the received video data is not the initial frame to be recorded in the unit file, the P frame or the B frame is generated from the video data (e.g., only a difference from the I frame is extracted from the video data) and recorded in the unit file. Consequently, video data in more frames can be recorded in the unit file.

Meanwhile, when the video data needs to be recorded in another unit file ("Yes" in step S16), processing of stopping recording of the video data in the unit file currently in the open state is performed. Specifically, CPU 11 adds a header part to the head of the video data and adds footer part (F) to the end of the video data in the unit file currently in the open state (step S18) as illustrated in Fig. 4. The footer part includes information related to the unit file and/or video data to be recorded in the unit file.

When the header part is added to the video data in step S17, CPU 11 changes contents in the header part generated in step S14 as necessary.

When the unit file obtained by adding the header part and the footer part to the video data has a size smaller than the size determined in step S12, CPU 11 further includes padding data (P) in the unit file as illustrated in Fig. 4. The padding data does not have specific meaning and has a purpose to intend to increase a file size.

After adding the header part and the footer part to the video data and adding the padding data as necessary, CPU 11 closes the current unit file (step S19). Here, closing the unit file means that the unit file is disabled to record data. Consequently, generation of one unit file having a size one or more times the erasure block size is implemented.

After the unit file is generated, the operation of recording video data returns to step S13. That is, CPU 11 performs steps S13 to S19 described above as long as a stream of the video data is received from video output device 2, and records the received stream of the video data in a new unit file. Consequently, the video data as the stream data is divided and recorded in multiple unit files.

When the video data is no longer received from video output device 2 in step S15 described above ("No" in step S15), recording of the video data in the unit file currently in the open state is stopped. Specifically, CPU 11 adds a header part to the head of the video data and adds a footer part to the end of the video data in the unit file currently in the open state (step S20).

When the header part is added to the video data in step S20, CPU 11 changes contents in the header part generated in step S13 as necessary. CPU 11 may include padding data in the unit file as necessary. Consequently, when the video data included in the unit file is small and the unit file has a size smaller than the size determined in step S11, the size of the unit file can be made one or more times the erasure block size.

After adding the header part and the footer part to the video data and adding the padding data as necessary, CPU 11 closes the current unit file (step S21).

When a unit file having a size equivalent to a size of one or more erasure blocks included in first storage 3 is generated from the video data and the unit file is recorded in first storage 3 as described above, an occurrence of the garbage collection in the first storage 3 can be suppressed. This is because the unit file has the size equivalent to the one or more erasure blocks, so that other data is not recorded in the erasure block in which a certain unit file is recorded. For example, when the unit file is erased from the first storage 3 to erase the video data, only the unit data needs to be erased in units of an erasure block. Then, other data recorded in another erasure block does not need to be erased and to be moved to yet another erasure block. That is, to erase a unit file in a specific erasure block, other data recorded in the specific erasure block and not to be erased does not need to be erased and to be moved to another erasure block.

### [3-2. Operation example 2]

Next, operation example 2 of recording video data will be described. Operation example 2 is performed to determine a recording position of a unit file in first storage 3, based on a degree of importance of video data to be recorded as the unit file. When the unit file is recorded, the unit file with a high degree of importance is recorded in multiple consecutive erasure blocks (first consecutive erasure blocks), and the unit data with a low degree of importance is recorded in multiple consecutive erasure blocks (second consecutive erasure blocks) different from the erasure blocks in which the unit data having the high degree of importance is recorded. That is, the unit files are collectively recorded for each degree of importance in first storage 3.

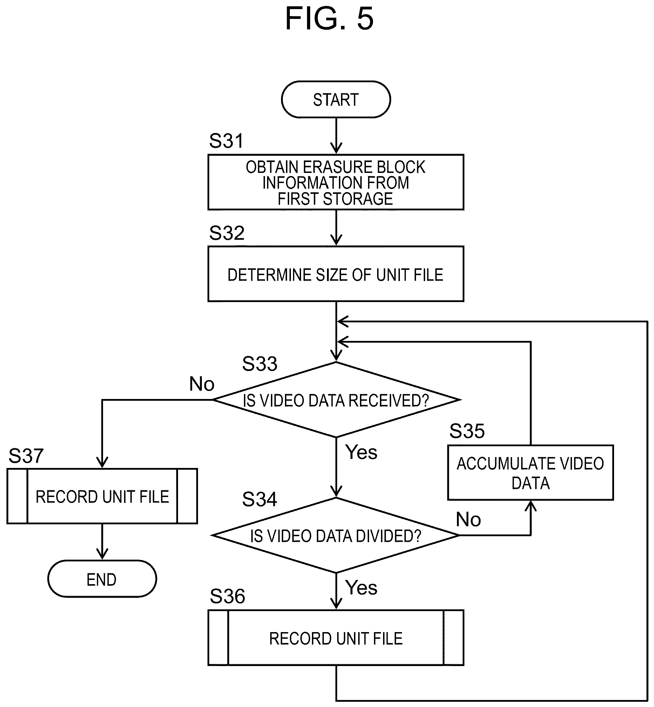

Hereinafter, a specific operation in operation example 2 of recording video data will be described with reference to Fig. 5. Fig. 5 is a flowchart illustrating operation example 2 of recording video data. When video recording system 100 is activated, information processing device 1 acquires erasure block information I1 in first storage 3 (step S31). This processing has been described in operation example 1, and thus will not be described here. After erasure block information I1 is acquired, recording of video data is started. Specifically, the video data is recorded as follows.

First, CPU 11 of information processing device 1 determines a size of the unit file (unit data) in which the video data is recorded (step S32). Processing of CPU 11 in step S32 is the same as the operation in step S12 in operation example 1 described above. Thus, operation in step S32 will not be described.

After determining the size of the unit file, CPU 11 determines whether the video data is received from video output device 2 (step S33). When the video data is received ("Yes" in step S33), CPU 11 determines not only whether the video data having the size determined in step S32 is currently accumulated in the information processing device 1, but also whether the video data needs to be divided (step S34).

When the video data does not need to be divided ("No" in step S34), that is, when the size of the video data accumulated so far is smaller than the size determined in step S32, CPU 11 accumulates the video data (step S35). Specifically, CPU 11 stores and accumulates the received video data in RAM 13 and/or storage unit 15.

In contrast, when the video data needs to be divided ("Yes" in step S34), that is, when the size of the video data accumulated so far becomes the size determined in step S32, the accumulated video data is recorded in first storage 3 (step S36).

When the video data is no longer received in step S33 ("No" in step S33), the video data accumulated so far is recorded in first storage 3 (step S37).

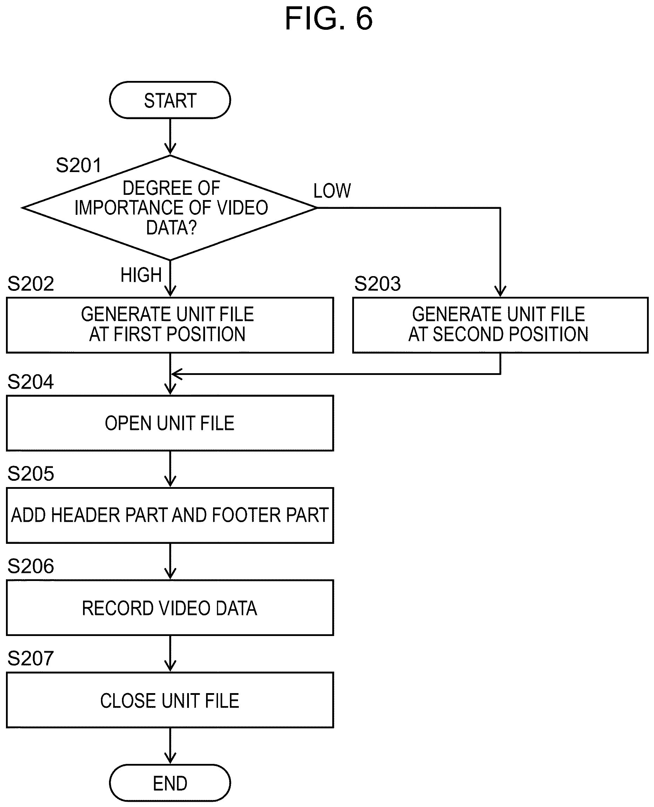

Operation example 2 is performed to record the accumulated video data in first storage 3 according to the flowchart illustrated in Fig. 6. That is, steps S36 and S37 described above are performed according to the flowchart illustrated in Fig. 6. Fig. 6 is a flowchart illustrating recording operation of video data in operation example 2.

First, CPU 11 of information processing device 1 determines a degree of importance of the accumulated video data (step S201). Specifically, CPU 11 analyzes images and/or sounds included in the video data, and determines the degree of importance of the video data, based on an analysis result. The degree of importance of the video data is high when contents of the video data are important, such as when the video data includes a climax scene. In contrast, when the video data includes contents that are not important, the degree of importance of the video data is low. CPU 11 analyzes the video data by image recognition and voice recognition using artificial intelligence, for example.

When the degree of importance of the video data is high ("high" in step S201), CPU 11 generates a unit file for recording the accumulated video data at a first position in a data recording region in first storage 3 (step S202). When a unit file including video data with a high degree of importance is recorded for the first time, the first position serves as a head of a recording region determined in advance to record video data with a high degree of importance. The head of the recording region has a physical address that coincides with a start address of any of empty erasure blocks.

In contrast, when a unit file including video data with a high degree of importance is already recorded, the first position indicates an existence position of the next erasure block in which the last unit file including the video data with a high degree of importance is recorded. That is, multiple unit files including video data with a high degree of importance are continuously recorded over multiple erasure blocks without existence of an erasure block in which no unit file is recorded.

In contrast, when the degree of importance of the video data is low ("low" in step S201), CPU 11 generates a unit file for recording the accumulated video data at a second position in the data recording region in first storage 3 (step S203). The second position is different from the first position where the unit file including the video data with a high degree of importance is recorded, and is separated from the first position by a distance corresponding to a multiple of the erasure block size. The first position and the second position are preferably sufficiently separated from each other to avoid overlap between the recording region of video data with a high degree of importance and the recording region of video data with a low degree of importance.

When a unit file including video data with a low degree of importance is recorded for the first time, the second position serves as a head of a recording region determined in advance to record video data with a low degree of importance. The head of the recording region has a physical address that coincides with a start address of any of empty erasure blocks.

In contrast, when a unit file including video data with a low degree of importance is already recorded, the second position indicates an existence position of the next erasure block in which the last unit file including the video data with a low degree of importance is recorded. That is, multiple unit files including video data with a low degree of importance are continuously recorded over multiple erasure blocks without existence of an erasure block in which no unit file is recorded.

After the unit file is generated at the position determined based on the degree of importance of the video data, the video data is recorded in the unit file. Specifically, CPU 11 first opens the unit file for recording the video data (step S204). After that, CPU 11 adds a header part and a footer part to the accumulated video data (step S205), adds padding data as necessary, and records the video data in the unit file in an open state (step S206). After the video data is recorded in the unit file, CPU 11 closes the unit file in which the video data is recorded (step S207).

When the unit file including the video data with a high degree of importance is recorded in the multiple consecutive erasure blocks (first consecutive erasure blocks), and the unit file including the video data with a low degree of importance is recorded in another plurality of consecutive erasure blocks (second consecutive erasure blocks) as described above, an occurrence of the garbage collection can be suppressed. For example, when only the video data with a low degree of importance is deleted (erased) from a file in which the video data with a high degree of importance and the video data with a low degree of importance are mixed, fragmentation of the file after the video data with a low degree of importance is deleted may occur, and thus the garbage collection may occur.

Meanwhile, when only the video data with a low degree of importance is deleted (erased) in a state where a unit file including the video data with a high degree of importance and a unit file including the video data with a low degree of importance are continuously recorded in separate recording regions, the unit file including the video data with a high degree of importance remains continuously recorded over multiple erasure blocks even after the video data with a low degree of importance is deleted. That is, fragmentation of a file including the video data with a high degree of importance is suppressed. As a result, an occurrence of the garbage collection is suppressed. Even when the video data with a low degree of importance is deleted, the unit file including the video data with a low degree of importance is continuously recorded over the multiple erasure blocks. Thus, an occurrence of the garbage collection together with deletion of the unit file is also suppressed.

### [3-2-1. Modification 1]

Next, modification 1 of operation example 2 of recording video data will be described. Modification 1 includes first storage 3 including multiple data recording regions. Data can be recorded separately in the multiple recording regions included in first storage 3. Examples of the recording region include a partition, a namespace, and a zone. The partition is generated by an instruction from an operating system of information processing device 1. The namespace is generated by an instruction to first storage 3. The zone is generated by physically dividing the recording region in first storage 3 (hardware). The zone can be formed by a unit of one or more semiconductor memory chips, a unit of a physical address of the semiconductor memory, and a unit of a predetermined number of recording elements in the semiconductor memory chip, for example.

When first storage 3 includes multiple data recording regions, multiple consecutive erasure blocks (first consecutive erasure blocks) in which unit data with a high degree of importance is recorded may be included in one recording region (first recording region) among the multiple data recording regions, and multiple consecutive erasure blocks (second consecutive erasure blocks) in which unit data with a low degree of importance is recorded may be included in one recording region (second recording region) different from the recording region in which the unit data with a high degree of importance is recorded. Specifically, the first position in operation example 2 may be one vacant erasure block in the multiple data recording regions, and the second position may be one vacant erasure block in another data recording region.

When the video data with the same degree of importance is recorded for each recording region as described above, management of the video data is facilitated. Additionally, overlap between the recording region of a unit file including video data with a high degree of importance and the recording region of a unit file including video data with a low degree of importance can be prevented.

### [3-2-2. Modification 2]

Next, modification 2 of operation example 2 of recording video data will be described. Modification 2 includes first storage 3 having high performance (high data writing/reading speed) in which a unit file including video data with a high degree of importance is recorded, and a storage in which a unit file including video data with a low degree of importance is recorded, the storage having lower performance than first storage 3.

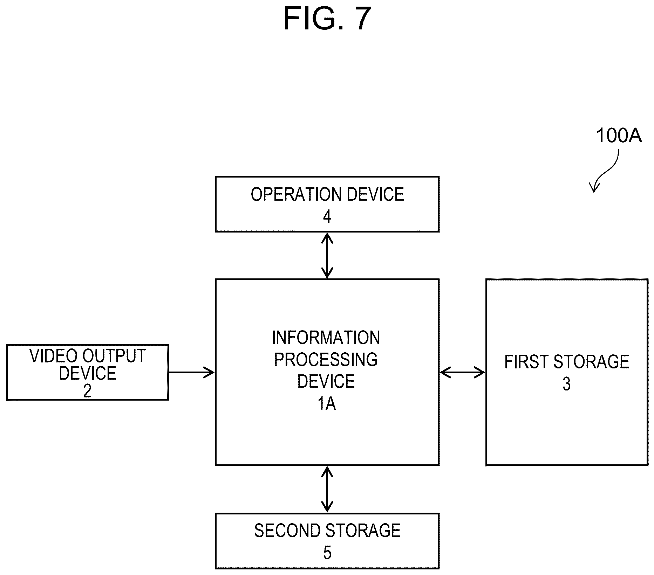

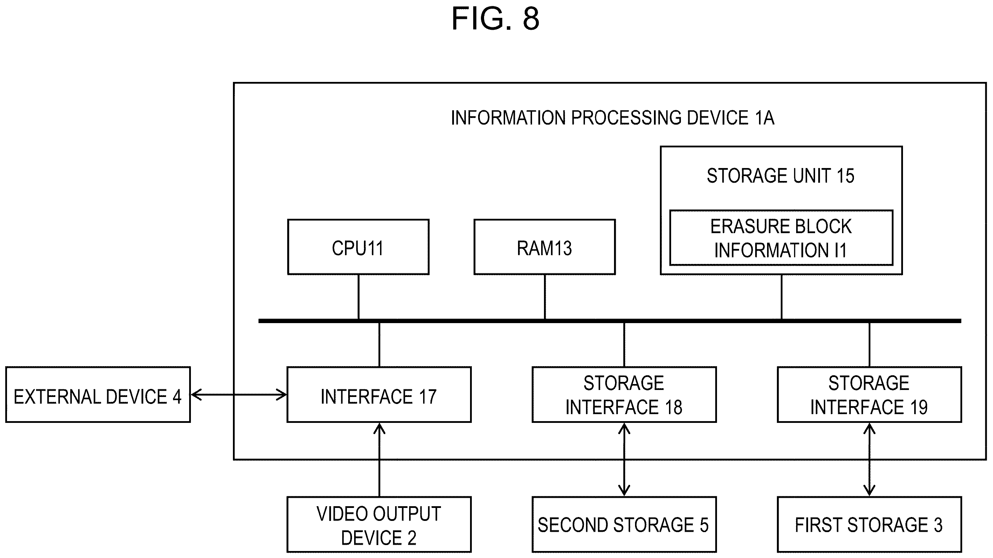

Modification 2 includes video recording system 100A further including second storage 5 as illustrated in Fig. 7. Fig. 7 is a diagram illustrating a configuration of video recording system 100A according to modification 2. As illustrated in Fig. 8, second storage 5 is connected to storage interface 18 of information processing device 1. Storage interface 18 is an S-ATA interface, for example. Fig. 8 is a diagram illustrating a configuration of information processing device 1A according to modification 2.

Second storage 5 writes and reads data at a slower speed than first storage 3. Specifically, second storage 5 is a relatively high-speed storage such as a quad-level cell (QLC) solid state drive or a hard disk (HDD), for example.

Modification 2 includes CPU 11 that copies a unit file including video data with a low degree of importance to second storage 5, and erases a unit file including video data with a low degree of importance recorded in first storage 3 after operation example 2 is performed to continuously record not only the unit file including the video data with a high degree of importance over multiple erasure blocks of first storage 3, but also the unit file including the video data with a low degree of importance over multiple other erasure blocks of first storage 3.

The video data with a high degree of importance is important in terms of content, and thus tends to be frequently used. In contrast, the video data with a low degree of importance tends to be used in secondary use and the like, and thus is not frequently used. Thus, when only the video data with a high degree of importance is recorded in first storage 3 with high performance, capacity of first storage 3 can be saved, and the video data can be accessed at high speed to increase efficiency of work (e.g., editing work) related to the video data.

### [3-2-3. Modification 3]

Next, modification 3 of operation example 2 of recording video data will be described. Modification 3 includes first storage 3 having high performance (high data writing/reading speed) in which a unit file including video data with a high degree of importance is recorded, and a storage in which the whole of video data with a low degree of importance is recorded, the storage having lower performance than first storage 3.

Video recording system 100A in modification 3 has a configuration as illustrated in Fig. 7. That is, second storage 5 records the whole of video data.

Modification 3 includes CPU 11 that copies a unit file including video data with a high degree of importance and a unit file including video data with a low degree of importance to second storage 5, and erases only a unit file including video data with a low degree of importance recorded in first storage 3 after operation example 2 is performed to continuously record the unit file including the video data with a high degree of importance over multiple erasure blocks of first storage 3, and to continuously record the unit file including the video data with a low degree of importance over multiple other erasure blocks of first storage 3.

When the unit file including the video data with a high degree of importance and the unit file including the video data with a low degree of importance are moved to second storage 5, CPU 11 rearranges the unit files in the reception order of the video data and records the unit files in second storage 5. That is, second storage 5 records the video data (unit files) aligned in the output order from video output device 2.

As described above, when only the video data with a high degree of importance is recorded in first storage 3 with high performance, capacity of first storage 3 can be saved, and the video data can be accessed at high speed to increase efficiency of work (e.g., editing work) related to the video data. Meanwhile, when the whole of the video data is recorded in the second storage 5 having low performance, the whole of video data can be easily stored and managed.

### [3-3. Operation example 3]

Next, operation example 3 of recording video data will be described. Operation example 3 is performed to handle the video data as one file instead of being divided for each unit file, and to designate a data position of the video data in the one file using a logical address. In the operation, the one file of the video data is separated into partial data having a size one or more times a size of an erasure block by using the logical address.

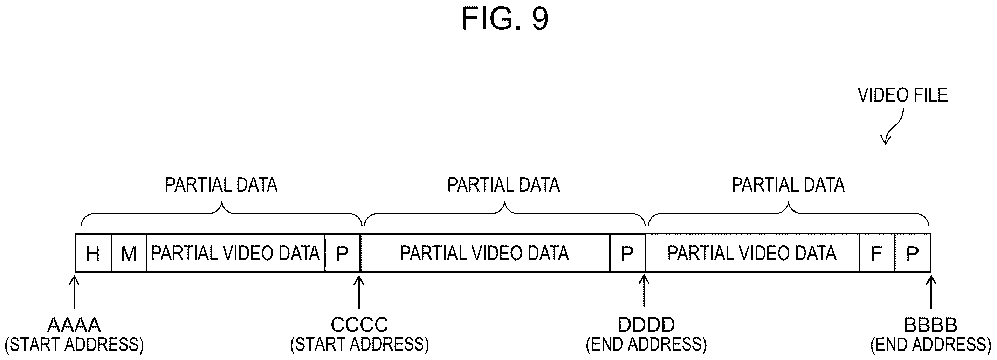

Specifically, the whole of video data is handled as one video file as illustrated in Fig. 9. The start and the end of the video file are respectively designated by a start address (AAAA) that is a logical address and an end address (BBBB) that is a logical address. The video file is further separated into partial data having a size one or more times the size of the erasure block. Positions in the video file of one unit include the start of the partial data that is designated by a start address (CCCC) being a logical address, and the end of the partial data that is designated by an end address (DDDD) being a logical address. Fig. 9 is a diagram illustrating a configuration of the video file in operation example 3.

Fig. 9 illustrates an example in which first partial data of the video file includes a header part (H), metadata (M), partial video data that is a part of the video data, and padding data (P). Last partial data of the video file includes footer part (F), partial video data, and padding data (P). Meanwhile, partial data, which is not located at the start and the end, includes only partial video data and padding data (P). That is, header part (H) exists only at the start of the video file, and footer part (F) exists only at the end of the video file. Then, metadata (M) exists only at the start of the video file.

Each of the pieces of partial data included in the video file has a size one or more times the size of the erasure block. The video data is physically recorded in first storage 3 in units of an erasure block according to operation example 1 and operation example 2 described above. After that, the physical address of the video data is associated with a logical address. That is, a difference between the start address and the end address of the partial data is one or more times the size of the erasure block. This association can be achieved using a table indicating correspondences between physical addresses and logical addresses, for example.

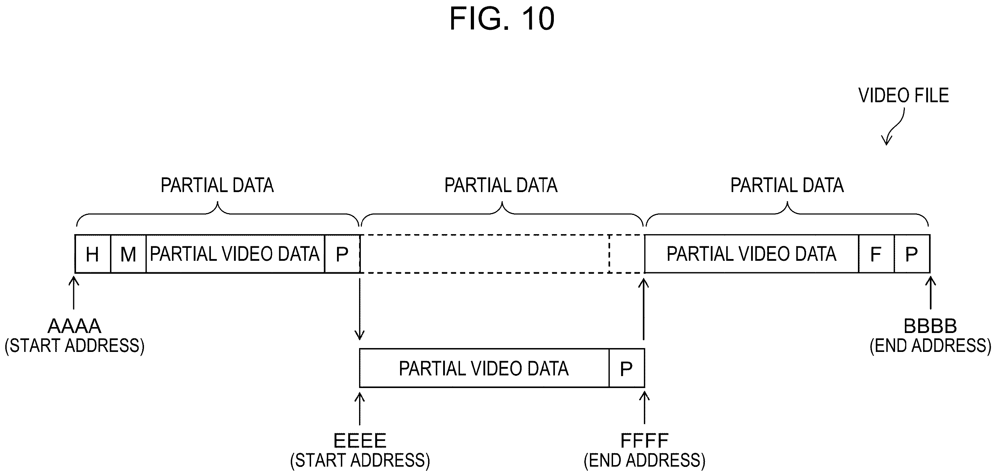

When the video data is managed using a logical address as described above, management of the video data can be facilitated. For example, when partial data including one piece of partial video data is deleted from a video file and another partial data (start address: EEEE, end address: FFFF) is inserted into the deleted part as illustrated in Fig. 10, the video file and the other partial data to be inserted can be connected on a file system of information processing device 1. Fig. 10 is a diagram illustrating an example of a method for managing a video file using a logical address.

### [4. Other exemplary embodiments]

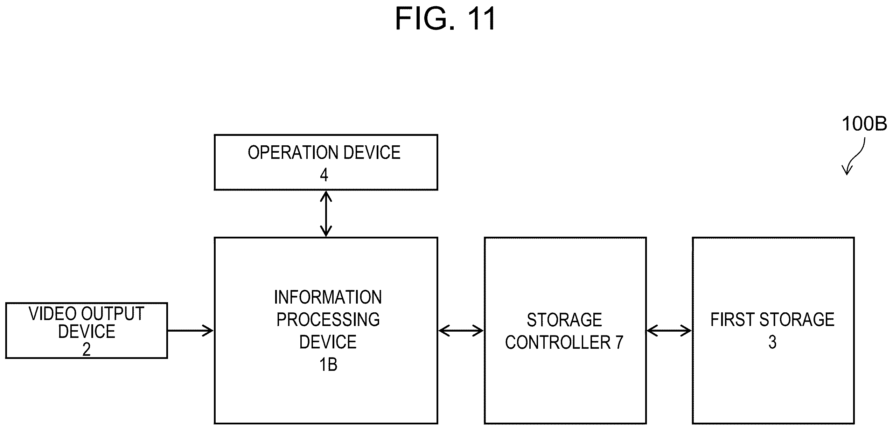

Although one exemplary embodiment of the present invention has been described above, the present invention is not limited to the above exemplary embodiment, and various modifications can be made without departing from the gist of the invention. In particular, multiple exemplary embodiments and modifications described herein can be appropriately combined as necessary.
(A) The order of each processing and the contents of each processing in the flowchart described above can be appropriately changed without departing from the gist of the present invention. Main bodies (information processing device 1 and first storage 3) that respectively execute each processing can also be appropriately changed without departing from the gist of the present invention.
(B) Operation examples 1 to 3 and modifications 1 to 3 described above may be entirely or partially incorporated in the information processing device. The video recording system can be operated by a user to set operation examples 1 and 2 described above such that any one of the examples is performed and the rest is not performed.
(C) As illustrated in Fig. 11, video recording system 100B may include storage controller 7. Fig. 11 is a diagram illustrating another example of video recording system 100B. Storage controller 7 is connected to information processing device 1B and first storage 3, and controls recording of the video data in first storage 3 according to an instruction from information processing device 1B. Fig. 11 illustrates video recording system 100B in which information processing device 1B may perform information processing related to the video data, determination of a degree of importance of the video data, and the like, and storage controller 7 may record the video data, based on operation examples 1 to 3 and modifications 1 to 3 described above.

Storage controller 7 can grasp a degree of importance of the video data by extracting metadata attached to the video data by information processing device 1B, for example.

### [5. Features of the present disclosure]

(1) A video recording system of the present disclosure includes an information processing device and a first storage. The information processing device performs processing related to video data. The first storage includes a semiconductor memory capable of recording the video data. The first storage in the video recording system includes multiple pages that are each a unit of writing, and includes multiple erasure blocks that are each a unit of erasure of data and that each include multiple consecutive pages. The information processing device generates unit data with a size equivalent to one or more erasure blocks from the video data, based on analysis of the video data, and records the unit data in the first storage.
   The first storage including the semiconductor memory in the video recording system of the present disclosure includes multiple pages that are each a unit of writing data, and multiple erasure blocks that are each a unit of erasure of data, the erasure blocks each including multiple consecutive pages. The information processing device generates unit data with a size equivalent to one or more erasure blocks from the video data, and stores the unit data in the first storage. The unit data has the size equivalent to the one or more erasure blocks, so that another unit data is not recorded in the erasure block in which certain unit data is recorded. Thus, when the certain unit data is erased, only the unit data needs to be erased in units of an erasure block. Then, the other unit data recorded in another erasure block does not need to be erased and moved to yet another erasure block. To erase data in a specific erasure block, other data recorded in the specific erasure block and not to be erased does not need to be erased and moved to another erasure block as described above. Thus, an occurrence of the garbage collection can be suppressed.
(2) In the video recording system of item (1) above, the information processing device may record the unit data in the first storage by aligning the unit data with a boundary of the erasure block, based on information on sizes of the erasure blocks. Consequently, the unit data can be reliably prevented from being recorded in the middle of an erasure block or from being ended in the middle of the erasure block. As a result, the garbage collection can be more reliably suppressed.
(3) In the video recording system of item (1) or (2) above, the information processing device may determine a degree of importance of the unit data, and record not only the unit data with a high degree of importance in a first continuous erasure block including multiple continuous erasure blocks, but also the unit data with a low degree of importance in a second continuous erasure block including multiple continuous erasure blocks that are different from the multiple continuous erasure blocks of the first continuous erasure block in which the unit data with a high degree of importance is recorded.
   Consequently, even when only the unit data with a low degree of importance is erased, for example, the unit data with a high degree of importance is less likely to be fragmented, and thus an occurrence of the garbage collection is suppressed. The video data with a low degree of importance is also continuously recorded in the multiple erasure blocks, so that an occurrence of the garbage collection is suppressed even when the video data with a low degree of importance is deleted.
(4) In the video recording system of item (3) above, the first storage may include multiple data recording regions into which data can be recorded separately. In this configuration, the first continuous erasure block in which the unit data with a high degree of importance is recorded may be included in a first recording region that is one data recording region of the multiple data recording regions. The second continuous erasure block in which the unit data with a low degree of importance is recorded may be included in a second recording region that is one data recording region different from the first recording region in which the unit data with a high degree of importance is recorded.
   Consequently, management of the video data is facilitated. Additionally, overlap between an erasure block of a unit file including video data with a high degree of importance and an erasure block of a unit file including video data with a low degree of importance can be prevented.
(5) The video recording system of any one of items (1) to (4) above may further include a second storage having lower performance than the first storage. In this configuration, the information processing device determines a degree of importance of the unit data, and records not only unit data with a high degree of importance in multiple consecutive erasure blocks of the first storage, but also the whole of the video data in the second storage. Consequently, capacity of first storage 3 can be saved, and the video data can be accessed at high speed to increase efficiency of work (e.g., editing work) related to the video data. Meanwhile, when the whole of the video data is recorded in the second storage 5 having low performance, the whole of video data can be easily stored and managed.
(6) In the video recording system of any one of items (1) to (5) above, the unit data may be one file. Consequently, management of unit data can be facilitated.
(7) In the video recording system of any one of items (1) to (6) above, the information processing device may be able to designate a data position in the video data using a logical address. In this configuration, the unit data may be designated by a first logical address representing a start position of the unit data in the video data and a second logical address representing an end position of the unit data. Consequently, the video data can be handled as one file, and management of the video data can be facilitated.
(8) Another information processing device of the present disclosure includes an interface and a controller. The interface connects a first storage including a semiconductor memory capable of recording video data. The controller controls recording of the video data into the first storage. The first storage in the information processing device includes multiple pages that are each a unit of writing, and includes multiple erasure blocks that are each a unit of erasure of data and that each include multiple consecutive pages. The controller allows unit data with a size equivalent to one or more erasure blocks to be generated from the video data, based on analysis of the video data, and allows the unit data to be recorded in the first storage.
   The first storage including the semiconductor memory in the information processing device of the present disclosure includes multiple pages that are each a unit of writing data, and multiple erasure blocks that are each a unit of erasure of data, the erasure blocks each including multiple consecutive pages. The controller allows unit data with a size equivalent to one or more erasure blocks to be generated from the video data, based on analysis of the video data, and allows the unit data to be recorded in the first storage. The unit data has the size equivalent to the one or more erasure blocks, so that other data is not recorded in the erasure block in which certain unit data is recorded. Thus, when the certain unit data is erased, only the unit data needs to be erased in units of an erasure block. Then, other data recorded in another erasure block does not need to be erased. To erase data in a specific erasure block, other data recorded in the specific erasure block and not to be erased does not need to be erased and moved to another erasure block as described above. Thus, an occurrence of the garbage collection can be suppressed.
(9) Another recording method of the present disclosure is a recording method for recording video data into a first storage including a semiconductor memory capable of recording video data. The first storage includes multiple pages that are each a unit of writing, and includes multiple erasure blocks that are each a unit of erasure of data and that each include multiple consecutive pages. The recording method includes steps below.

- A step of generating unit data with a size equivalent to one or more erasure blocks from video data, based on analysis of the video data.
- A step of recording the unit data in the first storage.

The first storage including the semiconductor memory in the recording method for recording video data of the present disclosure includes multiple pages that are each a unit of writing data, and multiple erasure blocks that are each a unit of erasure of data, the erasure blocks each including multiple consecutive pages. The recording method allows unit data with a size equivalent to one or more erasure blocks to be generated from the video data, and allows the unit data to be recorded in the first storage. A unit file has a size equivalent to the one or more erasure blocks, so that other data is not recorded in the erasure block in which a certain unit file is recorded. Thus, when the certain unit data is erased, only the unit data needs to be erased in units of an erasure block. Then, other data recorded in another erasure block does not need to be erased and moved to yet another erasure block. To erase data in a specific erasure block, other data recorded in the specific erasure block and not to be erased does not need to be erased and moved to another erasure block as described above. Thus, an occurrence of the garbage collection can be suppressed.

### INDUSTRIAL APPLICABILITY

The present disclosure can be widely applied to a video recording system for recording video data in a storage including a semiconductor memory, an information processing device, and a recording method for recording the video data in the storage.

### REFERENCE MARKS IN THE DRAWINGS

100, 100A, 100B: video recording system
1, 1A, 1B: information processing device
11: CPU
13: RAM
15: storage unit
I1: erasure block information
17: interface
18, 19: storage interface
2: video output device
3: first storage
4: operation device
5: second storage
7: storage controller

## Claims

1. A video recording system comprising:
an information processing device that performs processing related to video data; and
a first storage that includes a semiconductor memory configured to record the video data,
the first storage including multiple pages and multiple erasure blocks, the multiple pages being each a unit of writing, and the multiple erasure blocks being each a unit of erasure of data and each including consecutive pages among the multiple pages,
wherein the information processing device generates unit data with a size equivalent to one or more erasure blocks among the multiple erasure blocks from the video data, based on analysis of the video data, and records the unit data in the first storage.

2. The video recording system according to Claim 1, wherein the information processing device records the unit data in the first storage by aligning the unit data with a boundary of corresponding one of the erasure blocks, based on information on size of each of the erasure blocks.

3. The video recording system according to Claim 1, wherein
the information processing device determines a degree of importance of the unit data, and
the information processing device records not only the unit data with a high degree of importance in a first continuous erasure block including multiple continuous erasure blocks, but also the unit data with a low degree of importance in a second continuous erasure block including multiple continuous erasure blocks that are different from the multiple continuous erasure blocks of the first continuous erasure block.

4. The video recording system according to Claim 3, wherein
the first storage includes multiple data recording regions into which data is recorded separately,
the first continuous erasure block in which the unit data with a high degree of importance is recorded is included in a first recording region that is one data recording region of the multiple data recording regions, and
the second continuous erasure block in which the unit data with a low degree of importance is recorded is included in a second recording region of the multiple data recording regions, the second recording region being one data recording region different from the first recording region.

5. The video recording system according to Claim 1, further comprising:
a second storage having lower performance than the first storage,
wherein the information processing device determines a degree of importance of the unit data, and
the information processing device records not only unit data with a high degree of importance in multiple consecutive recording regions of the first storage, but also a whole of the video data in the second storage.

6. The video recording system according to Claim 1, wherein the unit data is one file.

7. The video recording system according to Claim 1, wherein
the information processing device designates a data position in the video data using a logical address, and
the unit data is designated by a first logical address representing a start position of the unit data in the video data and a second logical address representing an end position of the unit data.

8. An information processing device comprising:
an interface that connects a first storage including a semiconductor memory that records video data; and
a controller that controls recording of the video data into the first storage,
the first storage including multiple pages and multiple erasure blocks, the multiple pages being each a unit of writing, and the multiple erasure blocks being each a unit of erasure of data, the unit including consecutive pages among the multiple pages,
wherein the controller allows unit data with a size equivalent to one or more erasure blocks to be generated from the video data, based on analysis of the video data, and allows the unit data to be recorded in the first storage.

9. A recording method for recording video data into a first storage including a semiconductor memory that records the video data,
the first storage including multiple pages and multiple erasure blocks, the multiple pages being each a unit of writing, and the multiple erasure blocks being each a unit of erasure of data, the unit including consecutive pages of the multiple pages,
the recording method comprising the steps of:
generating unit data with a size equivalent to one or more erasure blocks from video data, based on analysis of the video data; and
recording the unit data in the first storage.
